Europäisches Patentamt

European Patent Office

Office européen des brevets

(11) Veröffentlichungsnummer: **0 386 584**
**A1**

# EUROPÄISCHE PATENTANMELDUNG

(21) Anmeldenummer: 90103746.5

(22) Anmeldetag: 26.02.90

(51) Int. Cl.⁵: **G11B  23/04**

(30) Priorität: 08.03.89 DE 8902833 U

(43) Veröffentlichungstag der Anmeldung:
**12.09.90 Patentblatt  90/37**

(84) Benannte Vertragsstaaten:
**AT CH DE FR GB IT LI NL**

(71) Anmelder: **BASF Aktiengesellschaft
Carl-Bosch-Strasse 38
D-6700 Ludwigshafen(DE)**

(72) Erfinder: **Khan, Tasneem Alam
Sandhofer Strasse 287
D-6800 Mannheim 31(DE)**

(54) **Behälter mit Aufzeichnungsträger.**

(57) Ein Behälter, insbesondere eine Bandkassette, mit einem Behältergehäuse und einem darin enthaltenen Aufzeichnungsträger ist im und/oder am Gehäuse und/oder am Aufzeichnungsträger selbst mit einem Duftstoff versehen, der entweder in das Kunststoffmaterial eingebracht oder auf die Kunststoffteile aufgebracht ist.

Verwendbar ist dieser Duftstoff für jeden Behälter mit Aufzeichnungsträgern, insbesondere für Kassetten aller Art für Audio-, Video-, Daten- oder andere Informationen.

EP 0 386 584 A1

## Behälter mit Aufzeichnungsträger

Die Erfindung betrifft einen Behälter mit Aufzeichnungsträger, insbesondere eine Bandkassette, mit mindestens einem, wenigstens zeitweise einen Duft abgebenden Duftstoff, umfassend ein Kassettengehäuse, wenigstens einen Aufzeichnungsträger und Führungs-, Andruck-, Wickelelemente für den Aufzeichnungsträger und andere Kassettenelemente.

Unter Behälter bzw. Kassette mit Aufzeichnungsträger wird im weitesten Sinne jeder Aufzeichnungsträger vom Film über Video- und Audioband bis hin zu Lochstreifen und Schreibmaschinenbändern und von Fotoplatten über Videoplatten bis hin zu Datenplatten und Disketten verstanden, der entweder überwiegend in einer Kassette oder einer sonstigen Hülle aufbewahrt und gegebenenfalls innerhalb oder außerhalb der Kassette oder Hülle abspielbar ist.

Am Beispiel der Audio-Kassetten soll die vorliegende Erfindung erläutert werden.

Auf dem Sektor der Audio-Kassetten sind verschiedene Wege beschritten worden, um die Kassetten verschiedener Typen oder Arten und Hersteller ästhetisch zu unterscheiden. Ein Weg waren verschiedene Farbgebungen oder die Oberflächenstrukturen der Kassettengehäuse oder weitere Designmerkmale wie Fenstergröße und -anordnung, Farbe und Design der Wickelkerne, Farbe der Vorspannbäder usw. Weitere Unterschiede waren in der Farbe und Ausbildung der Verpackungs- und/oder Aufbewahrungsbox sowie bei den darin enthaltenen Einlagefaltblättern gegeben, wobei letztere beispielsweise gleich auf das "Markenzeichen" des oder der Interpreten, z.B. den diesen zugehörigen Videoclip, hinweisen konnten.

Alle genannten Unterscheidungsmöglichkeiten sind mit relativ großem Aufwand verbunden und lassen insbesondere die ästhetischen Unterschiede der Kassetten selbst relativ klein bleiben.

Der Erfindung liegt die Aufgabe zugrunde, die Kassetten zu verbessern und die Ästhetik und die ästhetische Unterscheidungskraft einzelner Kassetten und einzelner Kassettentypen und -arten einander gegenüber zu erhöhen.

Die Aufgabe wird mit einer Kassette, insbesondere einer Bandkassette mit Mindesten einem wenigstens zeitweise einen Duft abgebenden Duftstoff, umfassend ein Kassettengehäuse, wenigstens einen Aufzeichnungsträger darin und Führungs-, Andruck-, Wickelelemente für den Aufzeichnungsträger und andere Kassettenelemente, gelöst, wenn der Duftstoff in oder an Teilen
- des Aufzeichnungsträgers und/oder
- des Kassettengehäuses und/oder
- von Führungselementen und/oder

- der Andruck- oder Reinigungselemente und/oder
- von speziellen am Aufzeichnungsträger und/oder Kassettenelementen befestigten Duftträgerelementen

vorhanden ist.

Damit erhält die Kassette ggf. ein zusätzliches, markantes, sehr schnell, wahrnehmbares Duft-Kennzeichen, und es sind andere Vorteile damit verbunden. Damit wird beispielsweise vorteilhaft erreicht, daß ein Blinder in der Lage ist, verschiedene Kassettentypen voneinander zu unterscheiden, ohne daß spezielle sichtbare oder ertastbare Markierungen an den Kassettengehäusen anzubringen sind.

Dieses erfindungsgemäße Unterscheidungsmerkmal erlaubt auch dem Autofahrer eine leichtere und sichere Kassettenauswahl, wenn z.B. die Art der aufgenommenen Musik mit ästhetisch leicht und schnell unterscheidbaren Duftstoffen gekennzeichnet ist.

In praktischer Ausbildung einer Kassette, in deren Kassettengehäuse eine Andruckeinrichtung für den Aufzeichnungsträger vorgesehen ist, kann der Duftstoff an der Andruckeinrichtung, insbesondere am Andruckfilz oder an einem Reinigungsvlies vorgesehen sein. In diesem Falle können das Filz- oder Vliesmaterial mit dem Duftstoff getränkt werden.

In weiterer Ausführung einer Kassette, in deren Kassettengehäuse mindestens eine Beilagefolie vorgesehen ist, kann diese durch Einarbeitung des Duftstoffes in das Folien- oder Schaumstoffmaterial oder durch Aufbringen auf die Oberfläche der Folie erfolgen.

In weiter Ausbildung der Kassette, die im Kassettengehäuse Bandführungselemente enthält, kann der Duftstoff an den Bandführungselementen vorgesehen sein.

In den zuvor beschriebenen praktischen Ausführungen von Kassetten ist es lediglich notwendig, Einzelteile mit dem Duftstoff zu behandeln, und die übrigen Kassettenteile und der Aufzeichnungsträger können unbehandelt bleiben. Es sind jedoch dabei auch Kombinationen mit einem zusätzlich behandelten Aufzeichnungsträger möglich.

In weiteren Ausgestaltungen kann der Duftstoff an mindestens einem Duftelement vorgesehen sien, das im oder am Kassettengehäuse, am Aufzeichnungsträger oder an Teilen, die von Kassettengehäuse umschlossen sind, befestigbar ist.

Damit ist das Duftelement als zusätzliches, kostengünstiges Teil verwendbar und kann in der Praxis z.B. als Duftstoff-Klebestück oder als Duft-Kissen ausgebildet sein, wobei letzteres zweckmäßig aus Filz-, Vlies- oder Schaumstoffmaterial das mit Duftstoff versehen ist, bestehen kann.

Das Einbringen des Duftstoffes, der mit dem Kunststoffmaterial nicht verträglich ist, ist zweckmäßig bei Herstellung des Kunststoffmaterials erfolgt durch Zumischen, so daß das Austreten insbesondere bei Zimmertemperatur, durch Ausschwitzen durch die Oberfläche des fertigen Kunststoffteils hindurch nach außen erfolgen kann.

Zweckmäßig sind Weichmacher- oder Harzzusätze mit dem Duftstoff zugemischt.

In einem weiteren Aufbringungsverfahren ist der Duftstoff auf Oberflächen von Folien oder Schichten der Kassette bzw. des Aufzeichnungsträgers durch Aufsprühen oder Aufrakeln, direkt oder in Form von Mikrokapseln, aufgebracht.

Außerdem ist es noch bei flüssigkeitsaufnahmefähigem Filz-, Vlies-, Schaumstoff-Material zweckmäßig, daß dasselbe mit einer Duftstoff-Flüssigkeit getränkt ist.

Es sind außerdem noch andere bekannte Ein- und Aufbringungsarten, die für die meist ölartigen Duftstoffe geeignet sind, verwendbar.

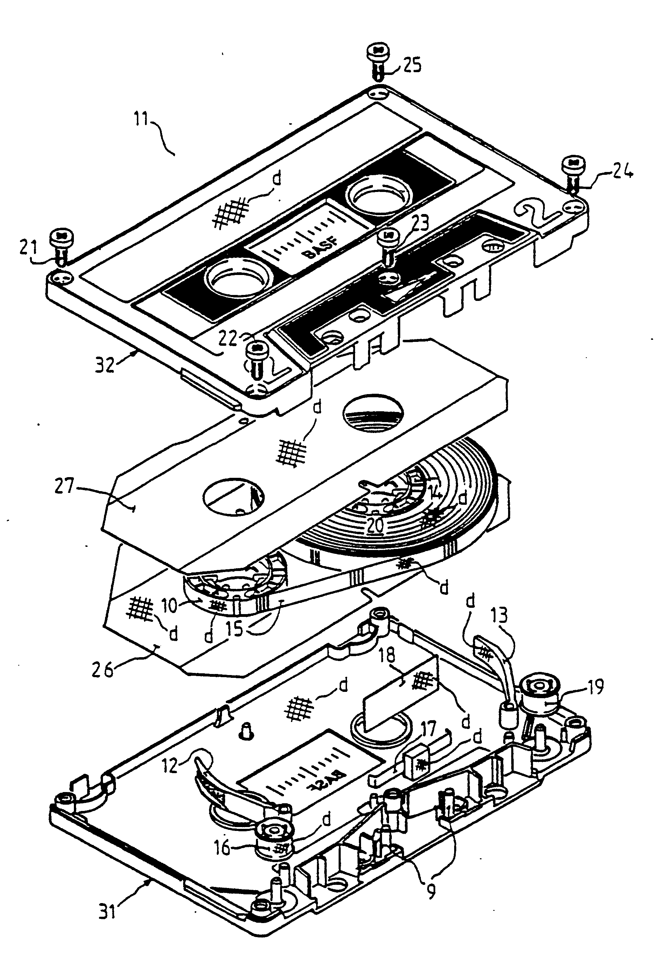

Weitere Einzelheiten der Erfindung gehen aus folgender Beschreibung von Ausführungsbeispielen sowie der Zeichnung hervor, wobei in letzterer eine handelsübliche Kompakt-Kassette der BASF Aktiengesellschaft in Explosionsdarstellung gezeigt ist.

Bei den Behältern mit Aufzeichnungsträgern bzw. Kassetten handelt es sich zweckmäßig z.B. um Kompakt-Kassetten, Videokassetten der verschiedenen Videosysteme, Kassettenfilme und Disketten.

Als Duftstoffe kommen solche infrage, die z.B. als Parfüme bekannt geworden sind und deren Grundsubstanzen oder Lebensmittel-Duftstoffe, wie z.B. Kaffee-Duftstoff usw. Dabei können diese Duftstoffe als natürliche oder synthetisierte Stoffe verwandt werden.

Duftstoffe, die verwendbar sind, sind beispielsweise:

1) Typische Vanillinriechstoffe wie z.B. Vanillin, Anisaldehyd, Isovanillin, 4-Nitroguaiacol, Helitropin,

2) Riechstoffe, die sich vom Benzylaceton ableiten, z.B. Himbeerketon, Zingeron, Benzylacetat, 1-(p-Hydroxyphenyl)-3-butenon, 1-(m-Hydroxyphenyl )-3-butanon,

3) Riechstoffe der Valencan-Reihe wie z.B. Nootkaton (Geruch: grapefruitartig), iso-Nootkaton (Geruch: holzartig), 1,10-Dihydronootkaton (Geruch: fruchtig), $\alpha$-Vetivon (Geruch: blumig-wachsartig-holzartig),

4) typische Riech- und Geschmacksstoffe des Röstaromas wie z.B. 2,5-Dimethyl-4-hydroxy-3(2H)-furanon (Geruch: Ananas-, Erdbeeer-Duft), 2-Hydroxy-3,5-dimethyl-2-cyclopenten-1-on, Maltol, 3-Hydroxy-3-methyl-2-cyclohexen-1-on,

5) Riechstoffe des Brotes, wie z.B. Isomaltol, 2,5-Dimethyl-3(2H)-furanon,

6) Riechstoffe mit "blumigem" und "grünem" Duftcharakter wie z.B. Jasmon(-)-Jasmonsäuremethylester, (-)-Jasmalaceton bzw. 3-cis-Hexanol, 4-cis-Heptenal, 5-cis-Octen-2-on, 2-trans-6-cis-mona-dienal,

7) Reichstoffe der $\alpha$-Ionon-Reihe z.B. trans-$\alpha$-Ionon (Geruch: Veilchenduft), trans-$\alpha$-Damascon bzw. cis-$\alpha$-Ionon (Geruch: Zedernholzduft), cis-$\alpha$-Damascon,

8) Riechstoffe der Undecanon-Reihe wie z.B. 6-Undecanon (Geruch: fruchtig), 4-Undecanon (fruchtig-rautig), 2-Undecanon (rautig),

9) Riechstoffe des grauen Ambra (Geruchsarten: Tabak, Sandelholztyp).

Diese Beispiele sind synthetisch herstellbare Duftstoffe (ohne Anspruch auf Vollständigkeit).

Außerdem gibt es wie erwähnt die natürlichen Duftstoffe die z.B. gewonnen werden aus Lavendel-, Orangen-, Rosen-, Flieder-, Narzissen-, Nelken-, Linden-, Jasminblüten oder ätherischen Ölen, wie z.B. Anis-, Baldrian-, Birken-, Zedern-, Zitronen-, Clementinen-, Zypressen-, Eukalyptus-, Kiefern-, Geranien-, Ingwer-, Kamillen-, Lavendel-, Pfefferminze-, Rosmarin-, Sandelholz-, Sellerie-, Wachholderbeeren-, Orangenschalen-, Wermut-, Zimt-Öl.

Diese Äufzählung ist wieder als beispielhaft und daher nicht im mindesten als vollständig zu betrachten.

Es sind weitere stark riechende oder duftende Stoffe bekannt, wie z.B. Benzin, Dieselöl, Salmiak, Terpentin, Petroleum usw, die nicht zu den Duftstoffen zählen, aber gegebenenfalls im Sinne der vorliegenden Erfindung einsetzbar sind.

Im folgenden wird anhand von Beispielen an Kompakt-Kassetten Videocassetten und Disketten (einschließlich der 3 1/2 Zoll Disk) erläutert, wie der Duftstoff eingebracht bzw. aufgetragen werden kann.

Beispiel 1
- Einzeln hergestellte Bandführungselemente aus Kunststoff
- das Kassettengehäuse
- die Disketten-Hülle
- die Beilage-Folien in Kompakt-Kassetten
- die Trägerfolie des Aufzeichnungsträgers.
- die Schicht (z.B. das Bindemittel) des Aufzeichnungsträgers.

Bei einem oder mehreren der vorgenannten Kassetten- oder Disketten-Teile kann der Duftstoff in geeigneter Menge und Verfahrensweise, insbesondere durch Zumischen, in den Kunststoff vor oder bei Herstellung eingebracht werden. Es ist jedoch darauf zu achten, daß der Duftstoff oder Teile davon mit dem zu behandelnden Kunststoff keine chemisch stabile Verbindung eingehen kann - also nicht verträglich ist und daß der Duftstoff nach und nach an die Oberfläche gelangt und durch, insbesondere bei Zimmertemperatur, die Oberfläche des behandelten Kunststoffs hindurch austreten und als wahrnehmbarer Duft in die Luft gelangen kann.

Das Einbringen erfolgt beispielsweise durch Mischen des Duftstoffes mit üblichen Zusatzstoffen, Antistatika und Weichmacher oder Wachs.

Beispiel 2

- ein Andruckfilz
- ein oder mehrere Duftkissen
- eine Vliesfolie
- eine Schaumstoff-Folie
- eine Polsterfolie aus anderem Material

Bei einem oder mehreren der vorstehenden Kassetten- oder Diskettenteile kann der Duftstoff entweder bei der Herstellung des Kunststoffmaterials (Schaumstoff, Vlies) eingebracht werden unter Befolgung des obigen Verträglichkeitsverbots. Außerdem ist jedoch die Möglichkeit gegeben, die meist saug- oder zumindest für Flüssigkeit aufnahmefähigen Materialien in geeigneter Weise mit dem Duftstoff zu tränken.

Beispiel 3

Alle glatten Oberflächen von Folien oder Schichten (Trägerfolie, Beilage-Folien, Disketten-Hüllen-Folie, Bandschicht) können durch Aufsprühen oder Aufrakeln von Duftstoff-Flüssigkeit (meistens ölartig) oder in Form von Mikrokapseln in geeigneter Menge mit Duft versehen werden. Dabei ist vorteilhaft, wenn an der zu behandelnden Oberfläche polare Molekülgruppen vorhanden sind, die den Duftstoff möglichst lange festhalten können.

Die benötigte Menge des Duftstoffes ist dem Einzelfall anzupassen, je nachdem welche Duftintensität gewünscht ist und in welcher Menge und Geschwindigkeit der Duftstoff an die Luft gelangt und durch die menschlichen Riechorgane wahrnehmbar ist.

Die Duftintensität kann in einem weiten Bereich variiert werden.

In einem ersten Extremfall ist der Duftstoff nur geeignet, einen anderen nicht erwünschten Duft oder Geruch zu überdecken.

Im Normalfall wird die Duftkonzentration oberhalb der schwächsten, noch gerade wahrnehmbaren Duftkonzentration (minimum perceptibile) des gewählten Duftstoffes liegen.

Mit solchen gerade oder gut wahrnehmbaren Duftkonzentrationen von angenehamen Duftnoten kann der Kaufanreiz für die Kassetten unter- oder oberschwellig (d.h. unbewußt bzw. bewußt wahrnehmbar) vergrößert werden. Im anderen Extremfall liegt die Duftkonzentration so hoch, daß Duftbäume oder Duftspender durch eine erfindungsgemäße Kassette ersetzbar sind.

Handelt es sich bei dem Duftstoff-Träger um zusätzlich in oder an der Kassette oder Diskette anzubringende Elemente so ist sicherzustellen, daß keine Funktionsbeeinträchtigung des Aufzeichnungsträgers auftreten kann.

Es ist durchaus auch möglich, einen oder mehrere mit demselben oder unterschiedlichen Duftstoffen versehene Kassettenteile mit einem Aufzeichnungsträger ohne Duftstoff oder umgekehrt zu kombinieren. Es ist gleichfalls denkbar, nur das Kassettengehäuse mit Duftstoffe zu versehen.

In der Zeichnung ist eine handelsübliche Kompaktkassette 11 für Audioaufzeichnung/-wiedergabe dargestellt.

Das Magnetband 20 ist zu einer Bandrolle auf einem Wickelkern 14 aufgewickelt und auf den zweiten Wickelkern 10 umwickelbar. Das Kassettengehäuse besteht aus Deckelteil 32 und Bodenteil 31, die mittels Schrauben 21 bis 25 verbindbar sind. Als Bandführungselemente sind Beilagefolien 26 und 27, Bandumlenkrollen 16 und 19, Bandführungshebel 12 und 13 sowie Bandführungszapfen 9 in der Nähe der Frontseite der Kassette 11 zu erkennen. Das Vorspannband 15 ist am Wickelkern 10 mit einem Draht befestigt. Zu Andruckelementen gehört die Andruckfeder 17 mit dem Filzkissen. Das Abschirmblech 18 gehört zu den übrigen in Kassetten enthaltenen Einzelteilen, die auch Bandreinigungseinrichtungen, Band- oder Spulenbremseinrichtungen sowie Ver- und Entriegelungseinrichtungen usw. umfassen können, wie z.B. in Videokassetten.

Die Kassettenteile bzw. -elemente, die mit Duftstoff versehen sein können, sind mit einem aus gekreuzten Linien bestehendem Zeichen und dem Buchstaben "d" markiert. Die Zahl der Teile ist hier auf die beispielhaft dagestellte Kompakt-Kassette beschränkt anzusehen. Das Aufbringen des Duftstoffs durch Einbringen in Kunststoff oder Aufbringen auf Oberflächen oder Tränken von geeigneten saugfähigen Materialien oder Anbringen durch befestigbare Duftträgerelemente kann in jeweils geeigneter, zweckmäßiger und kostengünstiger Art und Weise vorgenommen werden, wie im einzelnen in den Schutzansprüchen beschrieben.

Es können auch mehrere Teile oder Elemente mit einem oder auch verschiedenen Duftstoffen versehen werden.

Ansprüche

1. Behälter mit Aufzeichnungsträger, insbesondere Bandkassette, mit mindestens einem, wenigstens zeitweise einen Duft abgebenden Duftstoff, umfassend ein Behältergehäuse, wenigstens einen Aufzeichnungsträger darin und Führungs-, Andruck-, Wickelelemente für den Aufzeichnungsträger und andere Behälterelemente, dadurch gekennzeichnet, daß der Duftstoff (d) in oder an Teilen
- des Aufzeichnungsträgers (20) und/oder
- des Kassettengehäuses (31, 32) und/oder
- von Führungselementen (12, 13 bzw. 16, 19 bzw. 26, 27 bzw 9) und/oder
- der Andruckelemente (17) und/oder
- von speziellen am Aufzeichnungsträger (20) und/oder Behälter- bzw. Kassettenelementen befestigten Duftträgerelementen
vorhanden ist.

2. Behälter nach Anspruch 1, dadurch gekennzeichnet, daß der Duftstoff (d) an der Andruckeinrichtung (17), insbesondere am Andruckfilz vorgesehen ist.

3. Behälter nach Anspruch 1, wobei im Kassettengehäuse als Führungselement mindestens eine Beilagefolie (26, 27) vorgesehen ist, dadurch gekennzeichnet, daß zumindest Teile der mindestens einen Beilagefolie (26, 27) mit dem Duftstoff (d) versehen sind.

4. Behälter nach Anspruch 1, dadurch gekennzeichnet, daß der Duftstoff (d) an den Bandführungselementen vorgesehen ist.

5. Behälter nach Anspruch 1, wobei der Duftstoff an mindestens einem Duftträgerelement vorgesehen ist, dadurch gekennzeichnet, daß dasselbe am Behälter- bzw. Kassettengehäuse, und/oder am Aufzeichnungsträger, befestigt ist.

6. Behälter nach Anspruch 5, dadurch gekennzeichnet, daß das mindestens eine Duftträgerelement als Duftstoff-Klebestück ausgebildet ist.

7. Behälter nach Anspruch 6, dadurch gekennzeichnet, daß das mindestens eine Duftträgerelement als Duft-Kissen ausgebildet ist.

8. Behälter nach Anspruch 2, 3 oder 6, dadurch gekennzeichnet, daß das Duftkissen oder die Beilagefolie oder das Duftstoff-Klebestück aus Filz-, Vlies- oder Schaumstoffmaterial ausgebildet und mit Duftstoff getränkt ist.

9. Behälter nach einem oder mehreren der Ansprüche 1 bis 8, dadurch gekennzeichnet, daß der Duftstoff mit dem Kunststoffmaterial eines Kassettenteils nicht verträglich ist, bei Herstellung des Kunststoff-Materials zugemischt ist und, insbesondere bei Zimmertemperatur, durch die Oberfläche des fertigen Kunststoffkassettenteils nach außen ausschwitzt.

10. Behälter nach Anspruch 9, dadurch gekennzeichnet, daß Weichmacher- und/oder Harzzusätze mit dem Duftstoff dem Kunststoff-Material zugemischt sind.

11. Behälter nach einem oder mehreren der Ansprüche 1 bis 8, dadurch gekennzeichnet, daß der Duftstoff auf Oberflächen von Folien oder Schichten der Kassette bzw. des Aufzeichnungsträgers durch Aufsprühen oder Aufrakeln aufgebracht ist.

12. Behälter nach einem oder mehreren der Ansprüche 1 bis 8, dadurch gekennzeichnet, daß bei flüssigkeitsaufnahmefähigem Filz-, Vlies-, Schaumstoff-Material dasselbe mit einer Duftstoff-Flüssigkeit getränkt ist.

13. Behälter nach einem oder mehreren der Ansprüchen 1 bis 12, dadurch gekennzeichnet, daß der Duftstoff in Mikrokapseln auf Gehäuse und/oder Aufzeichnungsträger und/oder Kassetteneinzelteilen aufgebracht ist.

14. Behälter nach einem oder mehreren der Ansprüche 1 bis 13, dadurch gekennzeichnet, daß dieser eine Kompakt-Kassette ist.

15. Behälter nach einem oder mehrerem der Ansprüche 1 bis 13, dadurch gekennzeichnet, daß dieser eine Videocassette ist.

16. Behälter nach einem oder mehreren der Ansprüche 1 bis 13, dadurch gekennzeichnet, daß dieser eine Datencassette, insbesondere eine Einspulenkassette ist.

17. Behälter nach einem oder mehreren der Ansprüche 1 bis 13, dadurch gekennzeichnet, daß dieser eine Hülle mit einer Datenplatte ist.

18. Beilagefolie für eine Kassette nach Anspruch 14, dadurch gekennzeichnet, daß der Duftstoff wenigstens teilweise auf die Oberfläche aufgebracht oder in das Material eingebracht ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.) |
|---|---|---|---|
| A | EP - A1 - 0 070 616 (TECHNICOLOR INC.)   * Fig. 2,6,12; Zusammenfassung; Seite 2, Zeilen 12-15 *   -- | 1,3,4, 8,11, 14,15 | G 11 B 23/04 |
| A | EP - A1 - 0 084 263 (MINNESOTA MINING AND MANU-FACTURING COMPANY)   * Fig. 1,2; Zusammenfassung; Seite 1, Zeilen 10-12 *   -- | 1,3,4, 8,11, 14 | |
| A | EP - A2 - 0 096 983 (DICTAPHONE CORPORATION)   * Fig. 3; Zusammenfassung *   ---- | 1,2,3, 4,8, 11,14 | |

| RECHERCHIERTE SACHGEBIETE (Int. Cl.) |
|---|
| G 11 B 23/00 |

Der vorliegende Recherchenbericht wurde für alle Patentansprüche erstellt.

| Recherchenort | Abschlußdatum der Recherche | Prüfer |
|---|---|---|
| WIEN | 11-06-1990 | BERGER |